(19) 

Europäisches
Patentamt
European
Patent Office
Office européen
des brevets

(11) **EP 1 801 163 B1**

(12) **EUROPEAN PATENT SPECIFICATION**

(45) Date of publication and mention
of the grant of the patent:
**05.08.2009 Bulletin 2009/32**

(51) Int Cl.:
***C08L 83/04*** *(2006.01)*          ***C09D 183/04*** *(2006.01)*

(21) Application number: **06256324.2**

(22) Date of filing: **12.12.2006**

(54) **Siloxane Encapsulants**

Siloxaneinkapselungen

Encapsulants siloxane

(84) Designated Contracting States:
**DE FR GB**

(30) Priority: **22.12.2005 US 752840 P**

(43) Date of publication of application:
**27.06.2007 Bulletin 2007/26**

(73) Proprietor: **Rohm and Haas Company**
**Philadelphia, PA 19106-2399 (US)**

(72) Inventors:
• **Khanarian, Garo**
**Princeton, NJ 08540 (US)**

• **Pedicini, Angelo**
**Ambler, Pennsylvania 19002 (US)**
• **Liu, Xiang-Qian**
**Norristown, Pennsylvania 19403 (US)**

(74) Representative: **Kent, Venetia Katherine et al**
**Rohm and Haas Europe Services ApS - UK**
**Branch**
**European Patent Department**
**4th Floor, 22 Tudor Street**
**London EC4Y 0AY (GB)**

(56) References cited:
**EP-A- 1 544 253          EP-A1- 1 424 363**
**US-A1- 2005 061 437**

EP 1 801 163 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

Printed by Jouve, 75001 PARIS (FR)

**Description**

The present invention relates to silicone-based polymers, polymeric compositions, and methods of preparation of the silicone-based polymers, and methods of use thereof with high intensity applications.

The next generation of applications for high brightness light emitting diodes (HBLED) being developed is for industrial and residential lighting. Currently, there are no viable encapsulants existing that can meet the long term (10,000 hrs - 100,000 hrs) and high temperature (100° C - 200° C) operating conditions for this application. Therefore a new class of encapsulants is required.

For visible light applications such as white light emitting diode (LED) lenses, camera lenses, or implantable intraocular lenses, it is desirable to maintain optical transmission over the visible range sufficient to prevent any detection of haze or color tint by the human eye. This degree of visually perceived clarity is often denoted "crystal clear", or equivalently "water white". Typically a suitable optical polymer for such visible light applications will exhibit absorption of less than 0.5 dB/cm or equivalently should have a transmission of greater than 90%, preferably greater than 95% in one centimeter across the visible range of wavelengths, and in particular at the short wavelength end of the visible spectrum.

In the fields of HBLEDs, photovoltaic cells, vertical cavity emitting lasers (VCSELs), high efficiency photosensors, antireflection (AR) coatings, waveguides, and flat panel displays, polymers may be used to form an encapsulating layer between the light emitting or light sensing element itself and an outer lens or cover glass, or may serve as both encapsulant and outer lens simultaneously. The degree of desired optical transmission in these applications again is typically greater than 90%, preferably greater than 95% over a one centimeter path at the wavelength of interest.

Another difficulty is the requirement for the polymeric materials to withstand high temperatures without degradation in mechanical or optical properties. When exposed to high temperature service conditions, many polymers will degrade in performance. Mechanical degradation takes the form of hardening, outgassing of volatiles, embrittlement, crazing, cracking, shrinking, melting, or delamination of the polymer from substrates. Performance degradation can take the form of increases in optical absorption noticeable visually as a transition from water white to yellow or brown color tint, or a development of milkiness or haze.

US 20040116640 attempts to solve these problems by disclosing silicone resin compositions for use in LED devices; however this patent application only discloses the use of compositions of a highly branched or cyclical structure. Low to moderately branched siloxane polymers and polymer films are preferred because of their lower crosslink density resulting in materials that have lower modulus and are less prone to cracking and delamination.

EP-A1-1 424 363 discloses a polymer produced by a process of reacting a vinylsiloxane containing a ratio of 0.06:1 alkoxy:Si and an acyclic hydrogen siloxane oligomer.

Thus a need still exists for low to moderately branched polymers and polymer films, and methods of use thereof that overcome at least one of the aforementioned deficiencies.

The present invention in its various aspects is as set out in the appended claims.

The present invention addresses this need by providing low to moderately branched, polysiloxane polymers that have acceptable optical transmission level and are resistant to yellowing and degradation. The polysiloxane compounds of the present invention are advantageously utilized in optical waveguides, high brightness light emitting diodes (HBLEDs), photovoltaic devices, vertical cavity surface emitting lasers (VCSELs), laser diodes, light sensing devices, flat panel displays, projection display optics components, and injection-moldable optical lenses and other optical parts, devices and structures and further in devices employing bulk encapsulation, devices employing the silicone polymer of the invention as a passive supporting matrix for photonically active elements, and discrete parts individually molded or overmolded using the silicone polymer of the invention.

In one aspect, it will lead to a wall poster above the present invention relates to a polymer produced by the process of reacting: a) a vinyl siloxane oligomer of average compositional formula I

$$R_nSiO_{(4-n)/2} \qquad I$$

wherein:

i) $2 \leq n \leq 3$;
ii) R is independently selected from $CH_3$, $OCH_3$, $OCH_2CH_3$, and vinyl;
iii) the number of Si atoms in the vinyl siloxane oligomer is less than 210;
iv) at least two R are vinyl containing units;
v) the vinyl siloxane oligomer has a viscosity from 10 centipoise to 10,000 centipoise at 25° C; and
vi) the ratio of alkoxy groups to Si atoms is in a range from 0.02:1 to 1.5:1; and

b) an acyclic hydrogen siloxane oligomer of average compositional formula formula II:

$$R^1{}_nSiO_{(4-n)/2} \qquad \text{II}$$

wherein:

   i) $2 \leq n \leq 3$; and
   ii) each $R^1$ is independently selected from H, alkyl, and haloalkyl and at least two $R^1$ are H; and
   iii) the acyclic hydrogen siloxane oligomer has a viscosity from 10 centipoise to 10,000 centipoise at 25° C;

in the presence of a noble metal hydrosilation catalyst
wherein the sum of the number of R that are vinyl containing units and the number of $R^1$ that are H is at least 5;
and, the ratio of R that are vinyl containing units and the $R^1$ that are H is in the range of 1:1 to 1:2.

In another aspect, the present invention relates to a prepolymer mixture comprising:

   a) a vinyl siloxane oligomer of average compositional formula I

$$R_nSiO_{(4-n)/2} \qquad \text{I}$$

wherein:

   i) $2 \leq n \leq 3$;
   ii) R is independently selected from $CH_3$, $OCH_3$, $OCH_2CH_3$, and vinyl;
   iii) the number of Si atoms in the vinyl siloxane oligomer is less than 210;
   iv) at least two R are vinyl containing units;
   v) the vinyl siloxane oligomer has a viscosity from 10 centipoise to 10,000 centipoise at 25° C; and
   vi) the ratio of alkoxy groups to Si atoms is in a range from 0.02:1 to 1.5:1; and

   b) an acyclic hydrogen siloxane oligomer of average compositional formula II:

$$R^1{}_nSiO_{(4-n)/2} \qquad \text{II}$$

wherein:

   i) $2 \leq n \leq 3$; and
   ii) each $R^1$ is independently selected from H, alkyl, and haloalkyl and at least two $R^1$ are H; and
   iii) the acyclic hydrogen siloxane oligomer has a viscosity from 10 centipoise to 10,000 centipoise at 25° C;
   wherein the sum of the number of R that are vinyl containing units and the number of $R^1$ that are H is at least 5; and, the ratio of R that are vinyl containing units and the $R^1$ that are H are in the range of 1:1 to 1:2.

In yet another aspect, the present invention relates to a light emitting device comprising: a substrate; a light emitting diode (LED), wherein the LED is integrated with the substrate; and, a polymeric composition encapsulating the LED, the polymeric composition comprising a polymer produced by the process of reacting.

   a) a vinyl siloxane oligomer of average compositional formula I

$$R_nSiO_{(4-n)/2} \qquad \text{I}$$

wherein:

   i) $2 \leq n \leq 3$;
   ii) R is independently selected from $CH_3$, $OCH_3$, $OCH_2CH_3$, and vinyl;
   iii) the number of Si atoms in the vinyl siloxane oligomer is less than 210;
   iv) at least two R are vinyl containing units;
   v) the vinyl siloxane oligomer has a viscosity from 10 centipoise to 10,000 centipoise at 25° C; and
   vi) the ratio of alkoxy groups to Si atoms is in a range from 0.02:1 to 1.5:1; and

b) an acyclic hydrogen siloxane oligomer of average compositional formula II:

$$R^1_n SiO_{(4-n)/2} \qquad II$$

wherein:

i) $2 \leq n \leq 3$; and
ii) each $R^1$ is independently selected from H, alkyl, and haloalkyl, and at least two $R^1$ are H; and'
iii) the acyclic hydrogen siloxane oligomer has a viscosity from 10 centipoise to 10,000 centipoise at 25° C;

in the presence of a noble metal hydrosilation catalyst

wherein the sum of the number of R that are vinyl containing units and the number of $R^1$ that are H is at least 5; and, the ratio of R that are vinyl containing units and the $R^1$ that are H are in the range of 1:1 to 1:2.

In another aspect the present invention relates to a method for producing a polymer encapsulated light emitting diode (LED) comprising:

providing a vinyl siloxane oligomer of average compositional formula I

$$R_n SiO_{(4-n)/2} \qquad I$$

wherein:

i) $2 \leq n \leq 3$;
ii) R is independently selected from $CH_3$, $OCH_3$, $OCH_2CH_3$, and vinyl;
iii) the number of Si atoms in the vinyl siloxane oligomer is less than 210;
iv) at least two R are vinyl containing units;
v) the vinyl siloxane oligomer has a viscosity from 10 centipoise to 10,000 centipoise at 25° C; and
vi) the ratio of alkoxy groups to Si atoms is in a range from 0.02:1 to 1.5:1;

and an acyclic hydrogen siloxane oligomer of average compositional formula II:

$$R^1_n SiO_{(4-n)/2} \qquad II$$

wherein:

i) $2 \leq n \leq 3$; and
ii) each $R^1$ is independently selected from H, alkyl, and haloalkyl, and at least two $R^1$ are H; and
iii) the acyclic hydrogen siloxane oligomer has a viscosity from 10 centipoise to 10,000 centipoise at 25° C;

wherein the sum of the number of R that are vinyl containing units and the number of $R^1$ that are H is at least 5; and, the ratio of R that are vinyl containing units and the $R^1$ that are H is in the range of 1:1 to 1:2.
applying the mixture to a LED; and
curing the mixture to form a polymer encapsulated LED.

## DETAILED DESCRIPTION

In the present invention there is provided a resultant silicone composition that is a product of two siloxane oligomers cross-linked with a catalyst.

A. Vinyl Siloxane Oligomer

Generally speaking, the vinyl siloxane oligomer is a vinyl siloxane copolymer which is the product of a condensation polymerization reaction among mono-, di- tri and/or tetrafunctional silane reagents. The terms mono-, di, tri, and tetra-functional silane reagents are well understood by those skilled in the art, and are therefore explained here only briefly. A monofunctional reagent in this regard has only one hydrolysable group such as chloro (or other halogen) or an alkoxy group attached to the silicon atom with all other valences of the silicon atom being occupied by non siloxane (Si--O-- Si) bond forming groups such as alkyl, vinyl, or like groups. These bond forming groups may not include phenyl groups. As is known by those skilled in the art, during the polymerization reaction the monofunctional reagent terminates the chain. A difunctional reagent has two hydrolysable groups, a tri-functional reagent has three hydrolysable groups and a tetra-functional reagent contains four hydrolysable groups. As is known in the art, during the polymerization reaction a difunctional reagent builds a linear chain and trifunctional and tetrafunctional reagents build a branched chain of polysiloxanes.

The condensation of the starting siloxane materials can be accomplished with or without the use of a condensation catalyst. Acidic or basic condensation catalysts may be employed to increase the rate of the condensation reaction. Acidic condensation catalysts that can be used include, for example, hydrochloric acid, acetic acid, oxalic acid, perchloric acid, p-toluenesulfonic acid, methanesulfonic acid, trifluoromethanesulfonic acid, phosphoric acid, and sulfuric acid. Basic condensation catalysts that can be used include, for example, tetramethylammonium hydroxide, tetraethylammonium hydroxide, guanidine, 4-dimethylaminopyridine, 1,7-diazbicyclo[4.3.0]nonane, and 1,4-diazabicyclooctane. The condensation reaction can be further accelerated by removal of the alcohol byproduct under reduced pressure.

The vinyl siloxane oligomer may incorporate other siloxane-containing components such as tetramethoxysilane, tetraethoxysilane, methyl trimethoxysilane, ethyltrimethoxysilane, dimethoxydivinylsilane, methylethyldimethoxysilane, diethoxydimethoxysilane, and the like.

Optionally the vinyl siloxane oligomer may be capped. Following the condensation reaction trimethyl methoxy silane may be added to the vinyl siloxane oligomer to decrease the number of resultant methoxy groups present in the oligomer. Capping produces advantageous effects such as minimizing slow postcuring of the resultant silicone composition due to moisture present in the air and reducing shrinkage. Other possible reagents for use in capping the vinyl siloxane oligomer include but are not limited to trialkylchloro silane and trioalkylalkoxy silane and the like.

The vinyl siloxane oligomer can be represented by an average compositional formula I in an embodiment of the present invention.

$$R_nSiO_{(4-n)/2} \qquad I$$

As used herein the term "average compositional formula" is defined as the result of the reaction of the tetra tri di and mono functional silanes. The substituent R in each occurrence is chosen independently for each siloxane unit from the group consisting of $CH_3$, $OCH_3$, $OCH_2CH_3$, and vinyl, wherein at least two R must be a vinyl-containing unit; the vinyl siloxane oligomer has a viscosity in ranges from 10 centipoise (cps) to 10,000 cp at 25° C; and the ratio of alkoxy groups to Si atoms is in a range from 0.02:1 to 1.5:1.

The variable n is in the range of 2 to 3 and may be independently selected and vary in ranges from lower limits of 2, 2.005, 2.01, or 2.10 to upper limits of 3, 2.9, 2.5, or 2.3. All of the ranges for n are inclusive and combinable.

The vinyl siloxane oligomer may further vary in viscosity from ranges from lower limits of 10, 20, 50, or 150 to upper limits of 10,000, 1,000, 600, or 500 cps. All of the viscosity ranges are inclusive and combinable. The ratio of alkoxy groups to Si atoms in the vinyl siloxane oligomer may further vary in ranges from lower limits of 0.02:1, 0.1:1, or 0.5:1 to upper limits of 1.5:1, 1.3:1, or 0.7:1. All of the ratio ranges are inclusive and combinable.

Furthermore the vinyl siloxane oligomer contains less than 210 Si atoms and may vary in ranges from a lower limit of 2, 5, 10, or 20 to an upper limit of 209, 200, 100, or 40 Si atoms. These ranges are inclusive and combinable. Molecular weights for the vinyl siloxane oligomers will be determined based upon the number of Si atoms. Generally, synthetic polymers are almost always a mixture of many different molecular weights, i.e. there is a "molecular weight distribution", abbreviated "MWD". For a homopolymer, members of the distribution differ in the number of monomer units which they contain. This idea also extends to copolymers. Given that there is a distribution of molecular weights, the most complete characterization of the molecular weight of a given sample is the determination of the entire molecular weight distribution. This characterization is obtained by separating the members of the distribution and then quantitating the amount of each that is present. Once this distribution is at hand, there are several summary statistics, or moments, which can be generated from it to characterize the molecular weight of the polymer.

The two most common moments of the distribution are the "weight average molecular weight", "$M_w$", and the "number average molecular weight", "$M_n$". These are defined as follows:

$$M_w = \Sigma(W_iM_i)/\Sigma W_i = \Sigma(N_iM_i^2)/\Sigma N_iM_i$$

$$M_n = \Sigma W_i/\Sigma(W_i/M_i) = \Sigma(N_iM_i)/\Sigma N_i$$

where:

$M_i$ = molar mass of $i^{th}$ component of distribution
$W_i$ = weight of $i^{th}$ component of distribution
$N_i$ = number of chains of $i^{th}$ component

and the summations are over all the components in the distribution. $M_w$ and $M_n$ are typically computed from the MWD as measured by gel permeation chromatography (GPC) by methods commonly known to those skilled in the art.

Those skilled in the art will also understand that in the event no tri-functional or tetra-functional reagent is used to make the vinyl siloxane oligomer, then the resulting vinyl siloxane polymer or oligomer is linear. In the event no difunctional reagent is used in the reaction forming the vinyl siloxane oligomer, then the resulting polymer or oligomer will be highly branched.

B. Acyclic Hydrogen Siloxane Oligomer

Generally speaking, the acyclic hydrogen siloxane oligomer is also a siloxane copolymer which is the product of a polymerization reaction among mono-, di-, tri-and/or tetra- functional silane reagents. The considerations regarding mono-, di-, tri and tetra-functional silane reagents described above in connection with the vinyl siloxane oligomer are, generally speaking applicable here also. However, the acyclic hydrogen siloxane oligomer should also include silicon-hydride (Si-H) moieties, because these moieties are utilized in the cross-linking reaction with the vinyl moieties included in the vinyl siloxane oligomer.

The acyclic hydrogen siloxane oligomer can be represented by an average compositional formula II in an embodiment of the present invention.

$$R^1_n SiO_{(4-n)/2} \qquad \text{II}$$

$R^1$ in the acyclic hydrogen siloxane oligomer can consist of but is not limited to H, alkyl, haloalkyl, vinyl, and alkoxy groups. In one embodiment $R^1$ is selected from the group consisting of H and alkyl.

It is also a requirement that the structure of the acyclic hydrogen siloxane oligomer be such that it is soluble in the prescribed weight percentage and form of the vinyl siloxane oligomer.

The molecular weight of the acyclic hydrogen siloxane oligomer may vary in weight from ranges from lower limits of 100, 500, or 1000 grams/mol to upper limits of 75,000, 20,000, or 10,000 grams/mol. All of the molecular weight ranges are inclusive and combinable.

The viscosity of the acyclic hydrogen siloxane oligomer may vary in viscosity from ranges from lower limits of 10, 20, 50, or 150cps to upper limits of 10,000, 1,000, 600, or 500 cps. All of the viscosity ranges are inclusive and combinable.

Those skilled in the art will understand that the term acyclic hydrogen siloxane oligomer defines a linear structure. As the level of tri-functional and tetra-functional oligomers increase, the amount of branching in turn increases as well.

General Procedure for the Preparation of the Acyclic Hydrogen Siloxane Oligomer

The procedure of preparing the acyclic hydrogen siloxane oligomer from the tetra-, tri-, di- and mono-functional reagents, described above (as applicable) is substantially similar to the procedure of preparing Part A. Thus, in the "resin hydrolysis" step the reagents are mixed and allowed to react and co- polymerize in exothermic reactions in the presence of water and a low molecular weight alkanol, such as methanol, under the protective blanket of an inert gas, such as N 2. The acidic aqueous phase formed in this step is separated from the organic phase that contains the resin formed in the reactions. The liquid resin obtained by "hydrolysis" is washed with water until neutral. In the next step, volatile materials are removed by evaporation in vacuum while heat is applied. Thereafter, the resin is filtered to give the acyclic hydrogen siloxane oligomer

C. Catalyst

The reaction between the acyclic hydrogen siloxane oligomer and the vinyl siloxane oligomer is conducted in the presence of a noble metal hydrosilation catalyst. The term noble metal hydrosilation catalyst is meant to encompass compounds and complexes that contain at least one noble metal in which the compound or complex functions a catalyst for hydrosilation of double bonds. The term also encompasses elemental noble metals.

Although rhodium is not always included as a noble metal, in the context of the present invention, Rh compounds, complexes, and the elemental Rh will be referred to as a noble metal herein unless stated otherwise and considered to fall within the definition of the term noble metal, which includes Pd, Pt, Ir and Rh.

In an embodiment of the present invention, a noble metal hydrosilation catalyst for use in the reaction of the acyclic hydrogen siloxane oligomer with the vinyl siloxane oligomer may include but is not limited to chloroplatinic acid, Karstedt's catalyst (Pt$_2${[(CH$_2$=CH)Me$_2$Si]$_2$O}$_3$), Ashby's catalyst {[(CH$_2$=CH)MeSiO]$_4$}$_3$Pt, Wilkinson's catalyst [tris (triphenylphosphine)rhodium (I) chloride], polymer bound Wilkinson's catalyst, tris(triphenylphosphine)iridium (I) chloride, chloroplatinic acid/octanol complex, platinum cyclovinylmethylsiloxane complex (Ashby-Karstedt Catalyst), platinum carbonyl cyclovinylmethylsiloxane complex, bis(benzonitrile)dichlorpalladium (II), tetrakis(triphenylphosphine)palladium (0), palladium 2,4-pentanedionate, iridium 2,4-pentanedionate, iridium cyclooctadiene chloride, Pt metal, Pd metal, Ir metal, and Rh metal.

Karstedt's catalyst typically is used with the polysiloxane oligomer and the vinyl siloxane oligomer described *supra* under reaction conditions that can vary in temperature and time. The reaction can be carried out at a temperature range from 50° C to 200° C. The reaction also can be carried out at temperature ranges varying from lower limits of 60° C, 70° C, or 90° C to upper limits of 180° C, 150° C, or 120° C. All of the temperature ranges are inclusive and combinable.

The noble metal hydrosilation catalysts are highly efficient and typically only require amounts in parts per million (ppm) for polymerization to occur. In an embodiment of the present of invention, from 1-100 ppm of noble metal hydrosilation catalyst may be present to promote the polymerization of the vinyl siloxane oligomer and the acyclic hydrogen siloxane oligomer. The range of the amount of noble metal hydrosilation catalyst that may further be present can vary from lower limits of 5, 10 or 20ppm to upper limits of 80 ppm, 60 ppm, or 40 ppm. All ranges of the noble metal hydrosilation catalyst are inclusive and combinable.

In choosing the amount of the noble metal hydrosilation catalyst, the artisan will recognize that any amount of noble metal hydrosilation catalyst within the ranges described *supra,* inclusive and/or combined, can be used in which polymerization of the vinyl siloxane oligomer and the acyclic hydrogen siloxane oligomer is promoted, and in which discoloration of the polymer product due to the residual catalyst does not occur, or is so minimal that the discoloration does not adversely affect the color or function of the product of the hydrosilation during subsequent use.

The vinyl siloxane oligomer, the acyclic hydrogen siloxane oligomer, and the noble metal hydrosilation catalyst are mixed in a hydrosilation-polymerization reaction to form a resultant silicone composition. Here, the equivalent ratio *(i.e.,* equivalents of vinyl to equivalents of Si-H) of the vinyl groups of the vinyl siloxane oligomer to Si-H groups of the acyclic hydrogen siloxane oligomer range from lower limits of 0.5, 0.8, 1.0, 1.2, or 2.0 to 1.0. All of the ranges are inclusive and combinable. The description thus far, of a polymer produced by the process of reacting an acyclic hydrogen siloxane oligomer and a vinyl siloxane oligomer in the presence of a noble metal hydrosilation catalyst, is not meant to imply that the functionalities of the vinyl siloxane oligomer and the acyclic hydrogen siloxane oligomer react stoichiometrically.

The polymeric compositions and prepolymeric mixtures in the embodiments of the present invention do not necessarily comprise only the vinyl siloxane oligomer, the acyclic hydrogen siloxane oligomer, and the catalyst. Optionally, fillers may be used in an embodiment of the present invention. Suitable fillers include but are not limited to colorless oxides of boron, zinc, strontium, silicon, aluminum, germanium, and tin and titania (TiO$_2$), zirconia, niobia, zinc selenide, zinc sulphide, lead sulfide, indium phosphide, gallium nitride, sapphire (Al$_2$O$_3$) and silica carbide. The mean particle sizes *(i.e.,* mean diameter of particles) of the aforementioned fillers are in ranges from lower limits of 0.001, 0.01, or 0.05 to upper limits of 10.0, 5.0, or 1.0 microns. All of the ranges are inclusive and combinable. Other fillers that may be used include carbon nanotubes, glass or quartz fibers, and mica platelets.

Typically, the filler is added to modify the polymeric composition with respect to its overall refractive index and mechanical properties such as shrinkage characteristics, the coefficient of thermal expansion (CTE), and hardness. The filler can comprise the polymeric composition in ranges from lower limits of 5, 10, or 20, 30 wt % to 80, 60, 50, or 40 wt% based upon the weight of the polymeric composition. All of the aforementioned ranges are inclusive and combinable.

In addition to the filler, the polymeric composition may further contain additives. Examples include but are not limited to phosphors, flow control agents, flatting agents, wetting agents, and adhesion promoters. For example, phosphors may be incorporated to generate specific wavelengths of the emitted light. Flow control, flatting agents, and wetting agents may be employed to facilitate the handling characteristics of the polymeric composition

The polymeric compositions of the present invention have a refractive index (R.I.) in a range from 1.3 to 2.5. When the compositions are being used to encapsulate, for example, an LED, the artisan will generally attempt to match the R.I. of the cured polymeric composition to the R.I. of the LED. Refractive indices from 1.3 to 2.5 are the normal range with indices from 1.3 to 2.5 and 1.5 to 2.0 being common. The films also typically exhibit less than a 10 % decrease in light transmission within the range of 450 - 470 nm when the films are exposed to a temperature of 200° C for 1,000 hrs.

The polymer and polymeric compositions of the present invention may be used as encapsulants and in combination with substrates such as a LED, an optical circuit, a lasing element, an optical component such as an optical coupler, a repeater, a waveguide, an amplifier, an AR coating, and a fiber optic adhesive.

A light emitting device comprising a substrate, a light emitting diode (LED), and a polymeric composition encapsulating the LED is presented in accordance with the present invention. In one embodiment of the present invention, the substrate may be, for example, a circuit board, a metallic cup, a ceramic cup, a metallic reflector, and like. The LED is integrated with the substrate via an electronic circuit to allow normal operation of the LED. In addition, the encapsulant may serve as an in-situ lens for the LED.

The LED used in an embodiment of the present invention is a semiconductor device that emits visible light when an electric current passes through it. The light is typically emitted in a narrow wavelength band. The output range is from red (at a wavelength of approximately 700 nanometers) to blue-violet (about 400 nanometers). The LED may emit infrared energy (830 nanometers or longer) if chosen to do so and such a device is typically known as an infrared-emitting diode (IRED). At the same time, LEDs operating in the UV (200-400 nanometers) are currently being developed. The polymeric composition (encapsulant) used to encapsulate the LED is as described *supra.*

The light emitting device of the present invention operates under severe environmental conditions ranging from 1,000 hrs to about 100,000 hrs at a temperature in a range from -40° C to 250° C. Typical operating conditions include a time period from 1,000 hrs to 40,000 hrs at a temperature in a range from -40° C to 200° C. A test to ascertain the sufficiency of the polymeric composition for its intended purpose is to thermally age the cured polymeric composition at 150-200° C in air depending on the specific application. Aging can also be conducted in the presence of light of a wavelength emitted by the LED. Polymeric compositions of the present invention exhibit high resistance to yellowing, erosion, and loss of mechanical properties under the above thermal oxidative conditions.

A method for producing a polymer encapsulated LED is presented in accordance with the present invention. The method providing forming a mixture from a vinyl siloxane oligomer and an acyclic hydrogen siloxane oligomer; applying the mixture to a LED; and curing the mixture to form a polymer encapsulated LED. The mixture may be formed in the presence of a noble metal hydrosilation catalyst. The mixture additionally may comprise a filler material.

The aforementioned components can be combined in any order. Typically the vinyl siloxane oligomer, the filler material, and the noble metal hydrosilation catalyst are combined first. Then the siloxane oligomer is added. Heat may be added at any point during the combination step to provide a low viscosity mixture. The mixture is applied to a LED and subsequently cured. The LED may be an individual LED or an array of LEDs. Oven curing, infrared curing, hotplate curing, heated mold curing, and combinations thereof may be used to accomplish curing of the mixture.

A prepolymer mixture comprising a siloxane oligomer and a vinyl siloxane oligomer is presented in accordance with the present invention. The mixture may comprise a noble metal hydrosilation catalyst and/or a filler as well as other additives of the sort aforementioned. The prepolymer mixture may further comprise additional components that together constitute less than 10 % by weight of the prepolymer mixture.

An alternative method for producing a polymer encapsulated light emitting diode (LED) comprises: providing a prepolymer mixture; applying the prepolymer mixture to a LED, and curing the prepolymer mixture to form a polymer encapsulated LED. The prepolymer mixture provided is as described *supra.*

The prepolymer mixture may be heated to a temperature such that the viscosity of the mixture allows for manipulation and application to an individual LED or an array of LEDs. However, the prepolymer mixture does not have to be heated. The prepolymer mixture can be applied as received if the mixture has a viscosity suitable for application to the LED array. The mixture is applied to a LED and subsequently cured. Oven curing, infrared curing, hotplate curing, heated mold curing, and combinations thereof may be used to accomplish curing of the mixture. The aforementioned curing techniques are not meant to limit the types or kinds of curing techniques that may be used to cure the prepolymer mixture in an embodiment of the present invention. The artisan will recognize that any curing technique, which causes hydrosilation-polymerization of the prepolymer mixture components, *i.e.,* the siloxane oligomer and the vinyl siloxane oligomer, can be used as a curing technique in accordance with the present invention.

## EXAMPLES

Each of the following examples describes the preparation of a distinct vinylsiloxane oligomer.

### Example 1. Preparation of Vinyl Siloxane Oligomers

### Table 1, Examples # 5 and # 6

The distilled vinyltrimethoxysilane (8.9g, 0.06mol), dimethyldimethoxysilane (57.7g, 0.48mol) and deionized water (20.5g, 1.14mol) were charged into a three-neck round-bottom flask which equipped with a glass thermometer, a condenser and a magnetic stir. The flask was placed into a water bath. The reaction mixture was stirred at 60°C for 24 h. As the temperature rises to 50°C a slight reflux occurs as methanol is produced. The mixture goes from heterogeneous to homogeneous solution. Then trimethylethoxysilane (17.9g, 0.18mol) and 2.0 mL of aq. HCl (0.02N) were added from top of the condenser. The mixture was stirred at 60°C for another 24 h and then cooled to room temperature. The mixture was transferred to a round bottom flask, followed by rotary evaporation under vacuum. 25 g of slightly viscous and transparent product was obtained.

**Example 2. Preparation of Vinyl Siloxane Oligomers**

**Table 1, Examples # 7 and # 8**

Vinyltrimethoxysilane (14.8g, 0.10mol), dimethyldimethoxysilane (96.2g, 0.80mol), and deionized water (34.2g, 1.90mol) were charged into a three-neck round bottom flask equipped with a glass thermometer, a condenser and a magnetic stirrer. The flask was placed into a water bath. The reaction mixture was stirred at 60°C for 24 h. Then trimethylethoxysilane (27.9g, 0.29mol) and 2.9 mL of aq. HCl (0.02N) were added from top of the condenser. The mixture was stirred at 60°C for another 24 h, then it was cooled to room temperature, and two layers were formed. The mixture was transferred to a round bottom flask, followed by rotary evaporation under vacuum. 63 g of slightly viscous and transparent product was obtained.

**Example 3. Preparation of Vinyl Siloxane Oligomers**

**Table 1, Example # 9**

The distilled vinyltrimethoxysilane (11.86g, 0.08mol), dimethyldimethoxysilane (36.67g, 0.32mol) and deionized water (15.90g, 0.88mol) were charged into a three-neck round-bottom flask which was equipped with a glass thermometer, a condenser and a magnetic stir. The flask was placed into a water bath. The reaction mixture was stirred at 60°C for 24 h. As the temperature rises to 50°C a slight reflux occurs as methanol is produced. The mixture goes from heterogeneous to homogeneous solution. After the reaction, the mixture was transferred to a round bottom flask, followed by rotary evaporation under vacuum. 22 g of slightly viscous and transparent product was obtained.

**Example 4. Preparation of Vinyl Siloxane Oligomers**

**Table 1, Examples # 10 and # 11**

The distilled vinyltrimethoxysilane (8.82g, 0.06mol), dimethyldimethoxysilane (41.23g, 0.36mol) and deionized water (16.2g, 0.90mol) were charged into a three-neck round-bottom flask which equipped with a glass thermometer, a condenser and a magnetic stir. The flask was placed into a water bath. The reaction mixture was stirred at 60° C for 24 h. As the temperature rises to 50°C a slight reflux occurs as methanol is produced. The mixture goes from heterogeneous to homogeneous solution. After the reaction, the mixture was transferred to a round bottom flask, followed by rotary evaporation under vacuum. 23 g of slightly viscous and transparent product was obtained.

**Examples # 5-11**

**See Table 1**

Each of the vinyl siloxane oligomers were then mixed thoroughly with an acyclic hydrogen siloxane oligomer (see Table 1) in a glass scintillation vial.
The reaction was conducted in the presence of a platinum hydrosilation catalyst. The catalyst was a Divinyltetramethyldisiloxane Complex (2.1-2.4 % platinum concentration in xylene, low color) commercially available from Sigma-Aldrich, Inc. St. Louis, MO.
All components were thoroughly mixed by agitation. The formulation was transferred to a 2.5 mL glass microbeaker, or 1x 3 inch glass microscope slide and cured in a convection oven.
Example #s 5-11 were then extracted and heat-aged in an oven at 200° C, at ambient atmospheric pressure. They were then removed from oven and allowed to cool fully, prior to measuring the UV-vis absorption spectra with a Hewlett Packard 8453 UV-visible Spectrophotometer. Sample absorption was measured from 190 to 1100 nanometers. All data was baseline adjusted to equal zero absorbance at 700 nanometers, and normalized for absorbance through a 1 millimeter thick sample. The value of transmission at 450 nanometers was calculated with the absorbance value at that wavelength, A, through the following equation:

$$\text{Transmission} = 10^{(-A)}$$

**Comparative Example # 1**

Comparative example 1 is a Loctite HYSOL® OS4000 epoxy resin sample commercially available from Henkel Loctite. The resin sample was heat-aged in an oven at 140° C, at ambient atmospheric pressure. The sample were then removed from the oven and allowed to cool fully, prior to measuring the UV-vis absorption spectra with a Hewlett Packard 8453 UV-visible Spectrophotometer.
The data is displayed in Table 1 as follows:

Table 1

| Example # | Vinyl Siloxane Oligomer | Acyclic Hydrogen Siloxane Oligomer | Catalyst | Cure Schedule | Aging Temp. | Time at Aging Temp. | Transmission |
|---|---|---|---|---|---|---|---|
| 5 | 0.497g Example 1 | 0.741g [1] | 0.4 microliters Pt-siloxane complex in xlene (low color) | 15 hours @ 80 C<br><br>1 hour @ 120 C | 200C | 1300 hours | 100% |
| 6 | 0.701g Example 1 | 0.707g [2] | 0.4 microliters Pt-siloxane complex in xlene (low color) | 15 hours @ 80 C<br><br>1 hour @ 120 C | 200C | 1300 hours | 100% |
| 7 | 0.11g Example 2 | 1.45g [3] | 0.4 microliters Pt-siloxane complex in xlene (low color) | 24 hours @ 80 C | 200C | 1300 hours | 91% |
| 8 | 0.055g Example 2 | 2.27g [4] | 0.5 microliters Pt-siloxane complex in xlene (low color) | 24 hours @ 80 C | 200C | 1300 hours | 100% |
| 9 | 0.50g Example 3 | 0.80g [5] | 0.3 microliters Pt-siloxane complex in xlene (low color) | 40 hours @ 80 C | 200C | 1000 hours | 96% |

(continued)

| Example # | Vinyl Siloxane Oligomer | Acyclic Hydrogen Siloxane Oligomer | Catalyst | Cure Schedule | Aging Temp. | Time at Aging Temp. | Transmission |
|---|---|---|---|---|---|---|---|
| 10 | 0.50g Example 4 | 0.80g 6 | 0.3 microliters Pt-siloxane complex in xlene (low color) | 40 hours @ | 200C | 1000 hours | 100% |
| 11 | 0.80g Example 4 | 0.32g 7 | 0.3 microliters Pt-siloxane complex in xlene (low color) | 40 hours @ 80 C | 200C | 1000 hours | 80% |
| Comparative 1 | | | | 2 hours @ 125 C | 140 C | 1300 hours | 25% |

1 HMS-151: methylhydrosiloxane-dimethylsiloxane copolymer; 1900-2000g/mol; 15-18 mol % (MeHSiO); commercially available from Gelest, Inc. Morrisville, PA

2 DMS-H11: hydride terminated polydimethylsiloxane; 1000-1100 g/moh 0.2 mol % Hydrogen; commercially available from Gelest, Inc. Morrisville, PA

3 HMS-013: methylhydrosiloxane-dimethylsiloxane copolymer; 45,000-60,000 g/mol; 0.5-1.0 mol % (MeHSiO); commercially available from Gelest, Inc. Morrisville, PA

4 DMS-H41: hydride terminated polydimethylsiloxane; 6300 g/moh 0.03 mol % Hydrogen; commercially available from Gelest, Inc. Morrisville, PA

5 H-terminated PDMS: hydrogen terminated polydimethyl siloxane; 580g/mol; 0.4 mol% Hydrogen; commercially available from Sigma Aldrich, Inc. St. Louis, MO

6 H-terminated PDMS: hydrogen terminated polydimethyl siloxane; 580g/mol; 0.4 mol% Hydrogen; commercially available from Sigma Aldrich, Inc. St. Louis, MO

7 HMS-151: methylhydrosiloxane-dimethylsiloxane copolymer; 1900-2000g/mol; 15-18 mol % (MeHSiO); commercially available from Gelest, Inc. Morrisville, PA

Qualitatively, Example #s 5-11 all appear colorless and optically transparent after aging; while Comparative Example #1 becomes severely discolored to dark yellow color when aged at 140° C for 1300 hours, considerably less vigorous conditions.

**Claims**

1. A polymer produced by the process of reacting:

a) a vinyl siloxane oligomer of average compositional formula I

$$R_nSiO_{(4-n)/2} \qquad I$$

wherein:

i) $2 \leq n \leq 3$;
ii) R is independently selected from $CH_3$, $OCH_3$, $OCH_2CH_3$, and vinyl;
vii) the number of Si atoms in the vinyl siloxane oligomer is less than 210;
viii) at least two R are vinyl containing units;

ix) the vinyl siloxane oligomer has a viscosity from 10 centipoise to 10,000 centipoise at 25°C; and

x) the ratio of alkoxy groups to Si atoms is in a range from 0.02:1 1 to 1.5:1; and

b) an acyclic hydrogen siloxane oligomer of average compositional formula formula II:

$$R^1_n SiO_{(4-n)/2} \qquad II$$

wherein:

i) $2 \leq n \leq 3$ and

ii) each $R^1$ is independently selected from H, alkyl, and haloalkyl and at least two $R^1$ are H; and

iv) the acyclic hydrogen siloxane oligomer has a viscosity from 10 centipoise to 10,000 centipoise at 25° C;

in the presence of a noble metal hydrosilation catalyst

wherein the sum of the number of R that are vinyl containing units and the number of $R^1$ that are H is at least 5; and, the ratio of R that are vinyl containing units and the $R^1$ that are H is in the range of 1:1 to 1:2.

2. The polymer of claim 1, wherein the noble metal hydrosilation catalyst is selected from the group consisting of chloroplatinic acid, Karstedt's catalyst ($Pt_a\{[(CH_2=CH)Me_2Si]_2O\}_3$), Ashby's catalyst $\{[(CH_2-CH)MeSiO]_4\}_3Pt$, Wilkinson's catalyst [tris(triphenylphosphine)rhodium (I) chloride], polymer bound Wilkinson's catalyst, [tris(triphenylphosphine)iridium (I) chloride], chloroplatinic acid/octanol complex, platinum cyclovinylmethylsiloxane complex (Ashby-Karstedt Catalyst), platinum carbonyl cyclovinylmethylsiloxane complex, bis(benzonitrile)dichlorpalladium (II), tetrakis(triphenylphosphine)palladium (0), palladium 2,4-pentanedionate, iridium 2,4-pentanedionate, iridium cyclooctadiene chloride, Pt metal, Pd metal, Rh metal, Ir metal, and combinations thereof.

3. The polymeric composition of claim 1, wherein the polymeric composition comprises a filler selected from the group consisting of oxides of boron, silicon, titanium, aluminum, germanium, tin, strontium, zirconium, and zinc having a mean particle sizes in a range from 0.001 to 10 microns.

4. A prepolymer mixture comprising:

a) a vinyl siloxane oligomer of average compositional formula I

$$R_a SiO_{(4-n)}/2 \qquad I$$

wherein:

i) $2 \leq n \leq 3$;

ii) R is independently selected from $CH_3$, $OCH_3$, $OCH_2CH_3$, and vinyl;

vii) the number of Si atoms in the vinyl siloxane oligomer is less than 210;

viii) at least two R are vinyl containing units;

ix) the vinyl siloxane oligomer has a viscosity from 10 centipoise to 10,000 centipoise at 25° C; and

x) the ratio of alkoxy groups to Si atoms is in a range from 0.02.1 to 1.5:1;

and

b) an acyclic hydrogen siloxane oligomer of average compositional formula II:

$$R^1_a SiO_{(4-n)/2} \qquad II$$

wherein:

i) $2 \leq n \leq 3$; and

ii) each $R^1$ is independently selected from H, and haloalkyl and at least two $R^1$ are H; and

iii)) the acyclic hydrogen siloxane oligomer has a viscosity from 10 centipoise to 10,000 centipoise at 25° C:

wherein the sum of the number of R that are vinyl containing units and the number of $R^1$ that are H is at least 5; and, the ratio off that are vinyl containing units and the $R^1$ that are H are in the range of 1:1 to 1:2.

5. The prepolymer mixture according to claim 3 comprising a noble metal hydrosilation catalyst selected from the group consisting of chloroplatinic acid, Karstedt's catalyst (Pt$_2$\{[(CH$_2$=CH)Me$_2$Si]$_2$O\}$_3$). Ashby's catalyst \{[(CH$_2$=CH)ME-SiO]$_4$\}$_3$Pt, Wilkinson's catalyst [tris(triphenylphosphine)rhodium (I) chloride], polymer bound Wilkinson's catalyst, tri3(triphenylphosphine)iridium (I) chloride, chloroplatinic acid/octanol complex, platinum cyclovinylmethylsiloxane complex (Ashby-Karstedt Catalyst), platinum carbonyl cyclovinylmethylsiloxane complex, bis(benzonitrile)dichlorpalladium (II), tetrakis(triphenylphosphine)palladium, palladium 2,4-pentanedionate, iridium 2,4-pentanedionate, iridium cyclooctadiene chloride, Pt metal, Pd metal Rh metal, Ir metal, and combinations thereof.

6. The prepolymer mixture according to claim 3 or 4 comprising a filler selected from the group consisting of oxides of boron, silicon, titanium, aluminum, germanium, tin, strontium, and zinc having a mean particle sizes in a range from 0.001 to 10 microns.

7. A light emitting device comprising:

   a substrate;
   a light emitting diode (LED), wherein the LED is integrated with the substrate; and,
   a polymeric composition encapsulating the LED, the polymeric composition comprising a polymer produced by the process of reacting:

   a) a vinyl siloxane oligomer of average compositional formula I

   $$R_aSiO_{(4-n)/2} \qquad I$$

   wherein:

   i) $2 \le n \le 3$;
   ii) R is independently selected from CH$_3$, OCH$_3$, OCH$_2$CH$_3$, and vinyl;
   vii) the number of Si atoms in the vinyl siloxane oligomer is less than 210;
   viii) at least two R are vinyl containing units;
   ix) the vinyl siloxane oligomer has a viscosity from 10 centipoise to 10,000 centipoise at 25°C; and
   x) the ratio of alkoxy groups to Si atoms is in a range from 0,02:1 to 1.5:1; and

   b) an acyclic hydrogen siloxane oligomer of average compositional formula II:

   $$R^1{}_nSiO_{(4-n)/2} \qquad II$$

   wherein:

   i) $2 \le n \le 3$; and
   ii) each R$^1$ is independently selected from H, alkyl, and haloalkyl, and at least two R$^1$ are H; and'
   iii) the acyclic hydrogen siloxane oligomer has a viscosity from 10 centipoise to 10,000 centipoise at 25°C;

   in the presence of a noble metal hydrosilation catalyst
   wherein the sum of the number of R that are vinyl containing units and the number of R$^1$ that are H is at least 5; and, the ratio of R that are vinyl containing units and the R$^1$ that are H are in the range of 1:1 to 1:2.

8. A method for producing a polymer encapsulated light emitting diode (LED) comprising:

   providing a vinyl siloxane oligomer of average compositional formula I

   $$R_nSiO_{(4-n)/2} \qquad I$$

   wherein:

   i) $2 \le n \le 3$;
   ii) R is independently selected from CH$_3$, OCH$_3$, OCH$_2$CH$_3$, and vinyl;
   vii) the number of Si atoms in the vinyl siloxane oligomer is less than 210;

viii) at least two R are vinyl containing units;
ix) the vinyl siloxane oligomer has a viscosity from 10 centipoise to 10,000 centipoise at 25°C; and
x) the ratio of alkoxy groups to Si atoms is in a range from 0.02:1 to 1.5:1;

and an acyclic hydrogen siloxane oligomer of average compositional formula II:

$$R^1_n SiO_{(4-n)/2} \qquad II$$

wherein:

i) $2 \leq n \leq 3$; and
ii) each $R^1$ is independently selected from H, alkyl, and haloalkyl, and at least two $R^1$ are H; and
iii) the acyclic hydrogen siloxane oligomer has a viscosity from 10 centipoise to 10,000 centipoise at 25° C;

wherein the sum of the number of R that are vinyl containing units and the number of $R^1$ that are H is at least 5; and, the ratio of R that are vinyl containing units and the $R^1$ that are H is in the range of 1:1 to 1:2.

applying the mixture to a LED; and
curing the mixture to form a polymer encapsulated LED.

**9.** The method of claim 8, wherein the mixture additionally comprises a filler material.


**Patentansprüche**

**1.** Polymer, hergestellt durch das Verfahren des Umsetzens von:

a) einem Vinylsiloxanoligomer einer durchschnittlichen Zusammensetzungsformel I

$$R_n SiO_{(4-n)/2} \qquad I$$

wobei:

i) $2 \leq n \leq 3$,
ii) R unabhängig aus $CH_3$, $OCH_3$, $OCH_2CH_3$ und Vinyl ausgewählt ist,
vii) die Anzahl von Si-Atomen in dem Vinylsiloxanoligomer weniger als 210 ist,
viii) mindestens zwei Reste R Vinyl-enthaltende Einheiten sind,
ix) das Vinylsiloxanoligomer eine Viskosität von 10 Centipoise bis 10.000 Centipoise bei 25°C aufweist, und
x) das Verhältnis von Alkoxygruppen zu Si-Atomen in einem Bereich von 0,02:1 bis 1,5:1 liegt, und

b) einem acyclischen Hydrogensiloxanoligomers einer durchschnittlichen Zusammensetzungsformel II:

$$R^1_n SiO_{(4-n)/2} \qquad II$$

worin:

i) $2 \leq n \leq 3$, und
ii) jedes $R^1$ unabhängig aus H, Alkyl und Halogenalkyl ausgewählt ist, und mindestens zwei $R^1$ H sind, und
iv) das acyclische Hydrogensiloxanoligomer eine Viskosität von 10 Centipoise bis 10.000 Centipoise bei 25°C aufweist,

in der Gegenwart eines Edelmetallhydrosilylierungskatalysators,
wobei die Summe der Anzahl an R, die Vinyl-enthaltende Einheiten sind, und der Anzahl an $R^1$, die H sind, mindestens 5 beträgt, und das Verhältnis von Resten R, die Vinyl-enthaltende Einheiten sind, und den Resten $R^1$, die H sind, in dem Bereich von 1:1 bis 1:2 liegt.

**2.** Polymer gemäß Anspruch 1, wobei der Edelmetallhydrosilylierungskatalysator aus der Gruppe, bestehend aus Chlorplatinsäure, Karstedt-Katalysator, $(Pt_2\{[(CH_2CH)Me_2Si]_2O\}_3)$, Ashby,-Katalysator $\{[(CH_2=CH)MeSiO]_4\}_3Pt,$

Wilkinson-Katalysator [Tris(triphenylphosphin)rhodium(I)chlorid], Polymer-gebundenem Wilkinson-Katalysator, [Tris(triphenylphosphin)iridium(I)chlorid], Chlorplatinsäure/Octanol-Komplex, Platin-Cyclovinylmethylsiloxankomplex (Ashy-Karstedt-Katalysator), Platincarbonylcyclovinyimethylsiloxankomplex, Bis(benzonitril)dichlorpalladium (II), Tetrakis(triphenylphosphin)palladium(0), Palladium-2,4-pentandionat, iridium-2,4-pentandionat, Iridiumcyciooctadienchlorid, Pt-Metall, Pd-Metall, Rh-Metall, Ir-Metall und Kombinationen davon, ausgewählt ist.

**3.** Polymere Zusammensetzung gemäß Anspruch 1, wobei die polymere Zusammensetzung ein Füllmittel, ausgewählt aus der Gruppe, bestehend aus Oxiden von Bor, Silizium, Titan, Aluminium, Germanium, Zinn, Strontium, Zirkonium und Zink, mit einer mittleren Teilchengröße in einem Bereich von 0,001 bis 10 Mikrometer umfaßt.

**4.** Präpolymergemisch, umfassend:

a) ein Vinylsiloxanoligomer einer durchschnittlichen Zusammensetzungsformel I

$$R_nSiO_{(4-n)/2} \qquad I$$

wobei:

i) $2 \leq n \leq 3$,
ii) R unabhängig aus $CH_3$, $OCH_3$, $OCH_2CH_3$ und Vinyl ausgewählt ist,
vii) die Anzahl von Si-Atomen in dem Vinylsiloxanoligomer weniger als 210 ist,
viii) mindestens zwei Reste R Vinyl-enthaltende Einheiten sind,
ix) das Vinylsiloxanoligomer eine Viskosität von 10 Centipoise bis 10.000 Centipoise bei 25°C aufweist, und
x) das Verhältnis von Alkoxygruppen zu Si-Atomen in einem Bereich von 0,02:1 bis 1,5:1 liegt, und

b) ein acyclisches Hydrogensiloxanoligomer einer durchschnittlichen Zusammensetzungsformel II:

$$R^1_nSiO_{(4-n)/2} \qquad II$$

worin:

i) $2 \leq n \leq$, und
ii) jedes $R^1$ unabhängig aus H, Alkyl und Halogenalkyl ausgewählt ist, und mindestens zwei $R^1$ H sind, und
iv) das acyclische Hydrogensiloxanoligomer eine Viskosität von 10 Centipoise bis 10.000 Centipoise bei 25°C aufweist,

wobei die Summe der Anzahl an R, die Vinyl-enthaltende Einheiten sind, und der Anzahl an $R^1$, die H sind, mindestens 5 beträgt, und das Verhältnis von Resten R, die Vinyl-enthaltende Einheiten sind, und den Resten $R^1$, die H sind, in dem Bereich von 1:1 bis 1:2 liegt.

**5.** Präpolymergemisch gemäß Anspruch 3, umfassend einen Edelmetallhydrosilylierungskatalysator, ausgewählt aus der Gruppe, bestehend aus Chlorplatinsäure, Karstedt-Katalysator, $(Pt2\{[(CH_2=CH)Me_2Si]_2O\}_3)$, Ashby-Katalysator $\{[(CH_2=CH)MeSiO]_4\}_3Pt$, Wilkinson-Katalysator [Tris(triphenylphosphin)rhodium(I)chlorid], Polymer-gebundenem Wilkinson-Katalysator, [Tris(triphenylphosphin)iridium(I)chlorid], Chlorplatinsäure/Octanol-Komplex, Platin-Cycfovinylmethylsiloxankomplex (Ashy-Karstedt-Katalysator), Platincarbonylcyclovinylmethylsiloxankomplex, Bis(benzonitril)dichlorpalladium(II), Tetrakis(triphenylphosphin)palladium(0), Palladium-2,4-pentandionat, Iridium-2,4-pentandionat, Iridiumcyclooctadienchlorid, Pt-Metall, Pd-Metall, Rh-Metall, Ir-Metall und Kombinationen davon.

**6.** Präpolymergemisch gemäß Anspruch 3 oder 4, umfassend ein Füllmittel, ausgewählt aus der Gruppe, bestehend aus Oxiden von Bor, Silizium, Titan, Aluminium, Germanium, Zinn, Strontium, Zirkonium und Zink, mit einer mittleren Teilchengröße in einem Bereich von 0,001 bis 10 Mikrometer.

**7.** Licht-emittierende Vorrichtung, umfassend:

ein Substrat,
eine Licht-emittierende Diode (LED), wobei die LED mit dem Substrat integriert ist, und
eine polymere Zusammensetzung, welche die LED einkapselt, wobei die polymere Zusammensetzung ein Polymer umfaßt, hergestellt durch das Verfahren des Umsetzens von:

a) einem Vinylsiloxanoligomer einer durchschnittlichen Zusammensetzungsformel I

$$R_nSiO_{(4-n)/2} \qquad I$$

wobei:

i) $2 \leq n \leq 3$,
ii) R unabhängig aus $CH_3$, $OCH_3$, $OCH_2CH_3$ und Vinyl ausgewählt ist,
vii) die Anzahl von Si-Atomen in dem Vinylsiloxanoligomer weniger als 210 ist,
viii) mindestens zwei Reste R Vinyl-enthaltende Einheiten sind,
ix) das Vinylsiloxanoligomer eine Viskosität von 10 Centipoise bis 10.000 Centipoise bei 25°C aufweist, und
x) das Verhältnis von Alkoxygruppen zu Si-Atomen in einem Bereich von 0,02:1 bis 1,5:1 liegt, und

b) einem acyclischen Hydrogensiloxanoligomers einer durchschnittlichen Zusammensetzungsformel I:I

$$R\backslash SiO_{(4-n)/2} \qquad II$$

worin:

i) $2 \leq n \leq 3$, und
ii) jedes $R^1$ unabhängig aus H, Alkyl und Halogenalkyl ausgewählt ist, und mindestens zwei $R^1$ H sind, und
iv) das acyclische Hydrogensiloxanoligomer eine Viskosität von 10 Centipoise bis 10.000 Centipoise bei 25°C aufweist,

in der Gegenwart eines Edelmetallhydrosilylierungskatalysators,
wobei die Summe der Anzahl an R, die Vinyl-enthaltende Einheiten sind, und der Anzahl an $R^1$ die H sind, mindestens 5 beträgt, und das Verhältnis von Resten R, die Vinyl-enthaltende Einheiten sind, und den Resten $R^1$ die H sind, in dem Bereich von 1:1 bis 1:2 liegt.

8. Verfahren zur Herstellung einer polymere eingekapselten Licht-emittierenden Diode (LED), umfassend:

das Bereitstellen eines Vinylsiloxanoligomers einer durchschnittlichen Zusammensetzungsformel I

$$R_nSiO_{(4-n)/2} \qquad I$$

wobei:

i) $2 \leq n \leq 3$,
ii) R unabhängig aus $CH_3$, $OCH_3$, $OCH_2CH_3$ und Vinyl ausgewählt ist,
vii) die Anzahl von Si-Atomen in dem Vinylsiloxanoligomer weniger als 210 ist,
viii) mindestens zwei Reste R Vinyl-enthaltende Einheiten sind,
ix) das Vinylsiloxanoligomer eine Viskosität von 10 Centipoise bis 10.000 Centipoise bei 25°C aufweist, und
x) das Verhältnis von Alkoxygruppen zu Si-Atomen in einem Bereich von 0,02:1 bis 1,5:1 liegt, und

und eines acyclischen Hydrogensiloxanoligomers einer durchschnittlichen Zusammensetzungsformel II:

$$R^1{}_nSiO_{(4-n)/2} \qquad II$$

worin:

i) $2 \leq n \leq 3$, und
ii) jedes $R^1$ unabhängig aus H, Alkyl und Halogenalkyl ausgewählt ist, und mindestens zwei $R^1$ H sind, und
iv) das acyclische Hydrogensiloxanoligomer eine Viskosität von 10 Centipoise bis 10.000 Centipoise bei 25°C aufweist,

wobei die Summe der Anzahl an R, die Vinyl-enthaltende Einheiten sind, und der Anzahl an $R^1$, die H sind, mindestens 5 beträgt, und das Verhältnis von Resten R, die Vinyl-enthaltende Einheiten sind, und den Resten $R^1$, die H sind, in dem Bereich von 1:1 bis 1:2 liegt. das Aufbringen des Gemisches auf eine LED, und

das Härten des Gemisches unter Bildung einer Polymer-eingekapselten LED.

**9.** Verfahren gemäß Anspruch 8, wobei das Gemisch zusätzlich ein Füllmittelmaterial umfaßt.

**Revendications**

**1.** Polymère produit par le procédé de réaction :

a) d'un oligomère de vinylsiloxane de formule de composition moyenne I

$$R_nSiO_{(4-n)/2} \qquad I$$

dans laquelle :

i) $2 \leq n \leq 3$ ;
ii) R est indépendamment choisi parmi $CH_3$, $OCH_3$, $OCH_2CH_3$, et un groupe vinyle ;
vii) le nombre d'atomes de Si dans l'oligomère de vinylsiloxane est inférieur à 210 ;
viii) au moins deux R sont des unités contenant un groupe vinyle ;
ix) l'oligomère de vinylsiloxane présente une viscosité de 10 centipoises à 10 000 centipoises à 25°C ; et
x) le rapport des groupes alcoxy aux atomes de Si se trouve dans un intervalle de 0,02:1 à 1,5:1 ; et

b) d'un oligomère d'hydrogénosiloxane acyclique de formule de composition moyenne II :

$$R^1_nSiO_{(4-n)/2} \qquad II$$

dans laquelle :

i) $2 \leq n \leq 3$ ; et
ii) chaque $R^1$ est indépendamment choisi parmi H, un groupe alkyle et haloalkyle et au moins deux $R^1$ sont H ; et
iv) l'oligomère d'hydrogénosiloxane acyclique présente une viscosité de 10 centipoises à 10 000 centipoises à 25°C ;

en présence d'un catalyseur d'hydrosilation de métal noble
dans lequel la somme du nombre de R qui sont des unités contenant un groupe vinyle et du nombre de $R^1$ qui sont H est au moins égale à 5 ; et le rapport des R qui sont des unités contenant un groupe vinyle et des $R^1$ qui sont H se trouve dans l'intervalle de 1:1 à 1:2.

**2.** Polymère selon la revendication 1, dans lequel le catalyseur d'hydrosilation de métal noble est choisi parmi l'acide chloroplatinique, le catalyseur de Karstedt ($Pt_2\{[(CH_2=CH)Me_2Si]_2O\}_3$), le catalyseur d'Ashby $\{[(CH_2=CH)Me-SiO]_4\}_3Pt$, le catalyseur de Wilkinson [chlorure de tris(triphénylphosphine)rhodium (I)], le catalyseur de Wilkinson lié à un polymère [chlorure de tris(triphénylphosphine)iridium (I)], un complexe d'acide chloroplatinique/octanol, un complexe de platine cyclovinylméthylsiloxane (catalyseur d'Ashby-Karstedt), un complexe de platine carbonylcyclovinylméthylsiloxane, le bis(benzonitrile)dichloro-palladium (II), le tétrakis(triphénylphosphine)palladium (0), le 2,4-pentanedionate de palladium, le 2,4-pentanedionate d'iridium, le chlorure d'iridium cyclooctadiène, le métal de Pt, le métal de Pd, le métal de Rh, le métal d'Ir et des combinaisons de ceux-ci.

**3.** Composition polymère selon la revendication 1, dans laquelle la composition polymère comprend une charge choisie parmi des oxydes de bore, de silicium, de titane, d'aluminium, de germanium, d'étain, de strontium, de zirconium et de zinc ayant des tailles moyennes de particules dans un intervalle de 0,001 à 10 microns.

**4.** Mélange de prépolymère comprenant :

a) un oligomère de vinylsiloxane de formule de composition moyenne I

$$R_nSiO_{(4-n)/2} \qquad I$$

dans laquelle :

i) $2 \leq n \leq 3$ ;
ii) R est indépendamment choisi parmi $CH_3$, $OCH_3$, $OCH_2CH_3$, et un groupe vinyle ;
vii) le nombre d'atomes de Si dans l'oligomère de vinylsiloxane est inférieur à 210 ;
viii) au moins deux R sont des unités contenant un groupe vinyle ;
ix) l'oligomère de vinylsiloxane présente une viscosité de 10 centipoises à 10 000 centipoises à 25°C ; et
x) le rapport des groupes alcoxy aux atomes de Si se trouve dans un intervalle de 0,02:1 à 1,5:1 ; et

b) un oligomère d'hydrogénosiloxane acyclique de formule de composition moyenne II :

$$R^1_nSiO_{(4-n)/2} \qquad II$$

dans laquelle :

i) $2 \leq n \leq 3$ ; et
ii) chaque $R^1$ est indépendamment choisi parmi H, un groupe alkyle et haloalkyle et au moins deux $R^1$ sont H ; et
iii) l'oligomère d'hydrogénosiloxane acyclique présente une viscosité de 10 centipoises à 10 000 centipoises à 25°C ;

dans lequel la somme du nombre de R qui sont des unités contenant un groupe vinyle et du nombre de $R^1$ qui sont H est au moins égale à 5 ; et le rapport des R qui sont des unités contenant un groupe vinyle et des $R^1$ qui sont H se trouve dans l'intervalle de 1:1 à 1:2.

5. Mélange de prépolymère selon la revendication 3 comprenant un catalyseur d'hydrosilation de métal noble choisi parmi l'acide chloroplatinique, le catalyseur de Karstedt ($Pt_2\{[(CH_2=CH)Me_2Si]_2O\}_3$), le catalyseur d'Ashby"s {[ $(CH_2=CH)MeSiO]_4\}_3Pt$, le catalyseur de Wilkinson [chlorure de tris(triphénylphosphine)rhodium (I)], le catalyseur de Wilkinson lié à un polymère [chlorure de tris(triphénylphosphine)iridium (I)], un complexe d'acide chloroplatinique/ octanol, un complexe de platine cyclovinylméthylsiloxane (catalyseur d'Ashby-Karstedt), un complexe de platine carbonylcyclovinylméthylsiloxane, le bis(benzonitrile)dichloro-palladium (II), le tétrakis(triphénylphosphine)palladium, le 2,4-pentanedionate de palladium, le 2,4-pentanedionate d'iridium, le chlorure d'iridium cyclooctadiène, le métal de Pt, le métal de Pd, le métal de Rh, le métal d'Ir et des combinaisons de ceux-ci.

6. Mélange de prépolymère selon la revendication 3 ou 4 comprenant une charge choisie parmi des oxydes de bore, de silicium, de titane, d'aluminium, de germanium, d'étain, de strontium et de zinc ayant des tailles moyennes de particules dans un intervalle de 0,001 à 10 microns.

7. Dispositif émettant de la lumière comprenant :

un substrat ;
une diode émettant de la lumière (LED), dans laquelle la LED est intégrée avec le substrat ; et
une composition polymère encapsulant la LED, la composition polymère comprenant un polymère produit par le procédé de réaction :

a) d'un oligomère de vinylsiloxane de formule de composition moyenne I

$$R_nSiO_{(4-n)/2} \qquad I$$

dans laquelle :

i) $2 \leq n \leq 3$ ;
ii) R est indépendamment choisi parmi $CH_3$, $OCH_3$, $OCH_2CH_3$, et un groupe vinyle ;
vii) le nombre d'atomes de Si dans l'oligomère de vinylsiloxane est inférieur à 210 ;
viii) au moins deux R sont des unités contenant un groupe vinyle ;
ix) l'oligomère de vinylsiloxane présente une viscosité de 10 centipoises à 10 000 centipoises à 25°C ; et

x) le rapport des groupes alcoxy aux atomes de Si se trouve dans un intervalle de 0,02:1 à 1,5:1 ; et

b) d'un oligomère d'hydrogénosiloxane acyclique de formule de composition moyenne II :

$$R^1_n SiO_{(4-n)/2} \qquad II$$

dans laquelle :

i) $2 \leq n \leq 3$ ; et
ii) chaque $R^1$ est indépendamment choisi parmi H, un groupe alkyle et haloalkyle et au moins deux $R^1$ sont H ; et
iii) l'oligomère d'hydrogénosiloxane acyclique présente une viscosité de 10 centipoises à 10 000 centipoises à 25°C ;

en présence d'un catalyseur d'hydrosilation de métal noble
dans lequel la somme du nombre de R qui sont des unités contenant un groupe vinyle et du nombre de $R^1$ qui sont H est au moins égale à 5 ; et le rapport des R qui sont des unités contenant un groupe vinyle et des $R^1$ qui sont H se trouve dans l'intervalle de 1:1 à 1:2.

8. Procédé de production d'une diode émettant de la lumière encapsulée dans un polymère (LED) comprenant :

la fourniture d'un oligomère de vinylsiloxane de formule de composition moyenne I

$$R_n SiO_{(4-n)/2} \qquad I$$

dans laquelle :

i) $2 \leq n \leq 3$ ;
ii) R est indépendamment choisi parmi $CH_3$, $OCH_3$, $OCH_2CH_3$, et un groupe vinyle ;
vii) le nombre d'atomes de Si dans l'oligomère de vinylsiloxane est inférieur à 210 ;
viii) au moins deux R sont des unités contenant un groupe vinyle ;
ix) l'oligomère de vinylsiloxane présente une viscosité de 10 centipoises à 10 000 centipoises à 25°C ; et
x) le rapport des groupes alcoxy aux atomes de Si se trouve dans un intervalle de 0,02:1 à 1,5:1 ;

et d'un oligomère d'hydrogénosiloxane acyclique de formule de composition moyenne II :

$$R^1_n SiO_{(4-n)/2} \qquad II$$

dans laquelle :

i) $2 \leq n \leq 3$ ;
ii) chaque $R^1$ est indépendamment choisi parmi H, un groupe alkyle et haloalkyle et au moins deux $R^1$ sont H ; et
iii) l'oligomère d'hydrogénosiloxane acyclique présente une viscosité de 10 centipoises à 10 000 centipoises à 25°C ;

dans lequel la somme du nombre de R qui sont des unités contenant un groupe vinyle et du nombre de $R^1$ qui sont H est au moins égale à 5 ; et le rapport des R qui sont des unités contenant un groupe vinyle et des $R^1$ qui sont H se trouve dans l'intervalle de 1:1 à 1:2,
l'application du mélange sur une LED ; et
le durcissement du mélange pour former une LED encapsulée dans un polymère.

9. Procédé selon la revendication 8, dans lequel le mélange comprend de plus un matériau de charge.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20040116640 A

- EP 1424363 A1